Europäisches Patentamt

European Patent Office

Office européen des brevets

(11) Publication number : **0 508 791 A1**

# (12) EUROPEAN PATENT APPLICATION

(21) Application number : **92303184.3**

(22) Date of filing : **09.04.92**

(51) Int. Cl.⁵ : **B60Q 1/44, B60Q 3/04**

(30) Priority : **09.04.91 GB 9107489**

(43) Date of publication of application :
**14.10.92 Bulletin 92/42**

(84) Designated Contracting States :
**AT BE CH DE DK ES FR GB GR IT LI LU MC NL PT SE**

(71) Applicant : **Yang, Tai-Her**
**5-1 Taipin Street**
**Si-Hu Town Dzan-Hwa (TW)**

(72) Inventor : **Yang, Tai-Her**
**5-1 Taipin Street**
**Si-Hu Town Dzan-Hwa (TW)**

(74) Representative : **Arthur, Bryan Edward et al**
**Withers & Rogers 4 Dyer's Buildings Holborn London EC1N 2JT (GB)**

(54) **Colour differential type light display device.**

(57)    A brake light is provided with a transparent or nearly transparent housing and two lamps (LA,LB) within the housing, which lamps are differently coloured and can be lit selectively by a switch (SW401). Accordingly the housing appears differently lit according to which lamp is lit- and its apparent colour and brightness is substantially unaffected by external illumination such as sunlight for example.

FIG. 4

## SUMMARY OF THE INVENTION

All of conventionally colored displaying lamps are designed to lit up/off with only single color for display and in general to accompany a mono-color housing or an additional colored cover for increasing the effect of display. However, when external light is much strong to result in the reflection of colored cover we could hardly tell whether the illuminator/ displaying lamp lits up or not so that some display error has occurred very often. The present invention relates to a transparent or much light-colored housing together with at least two sets of built-in luminaries provided as an electrical type source of light for producing the light in different colors and more specifically said two luminaries are driven alternatively to provide normal background color and second color display.

## BRIEF DESCRIPTION OF THE DRAWINGS

FIG. 1 is the embodiment showing C-connection auxiliary relay is alternating the color-differential type light display device of the present invention.

FIG. 2 is the embodiment showing another wiring connection between relay connection assembly and luminaries of FIG. 1.

FIG. 3 is the embodiment comprising solid circuit elements of same function.

FIG. 4 is the embodiment showing an two-throw switch being applied to the color-differential type light display device of the present invention.

## DETAILED DESCRIPTION OF THE INVENTION

The conventionally colored displaying lamps are designed to lit up/off with only single color for display and in general to accompany a mono-color housing or an additional colored cover for increasing the effect of display. However, when external light is much strong to result in the reflection of colored cover we could hardly tell whether the luminaries/displaying lamp lits up or not so that some error has occurred very often. The present invention relates to a transparent or much light-colored housing together with at least two sets of built-in luminaries provided as an electrical type source of light for producing the light in different colors and more specifically said two luminaries are driven alternatively to provide normal background color and second color display. The luminaries of color-differential type light display device comprise a plurality of solid LED light sources or filament type or gas exciting type luminaries appearing the light source of different colors.

Aforesaid luminaries provided to produce the light source of different colors may be one-piece or independent construction, and the light in different colors may be directly produced from the luminaries or by means of colored cover or filter plate.

For practical application, the brake lamp of a car, for example, a conventional brake lamp usually has a red housing and provides the effect of display subject to the bulb ON/OFF. However, when the housing of brake lamp reflects sunlight the drivers behind that car is difficult to identify whether the brake lamp lits up/or off. If apply the color-differential type warning lamp according to the present invention such as use green color as a normal background color and turn into the second color produced from red luminaries at time of braking whereby the drivers behind this car may easily find the brake lamp changing in color, i.e. turn green light into red light so as to obtain excellent effect of warning.

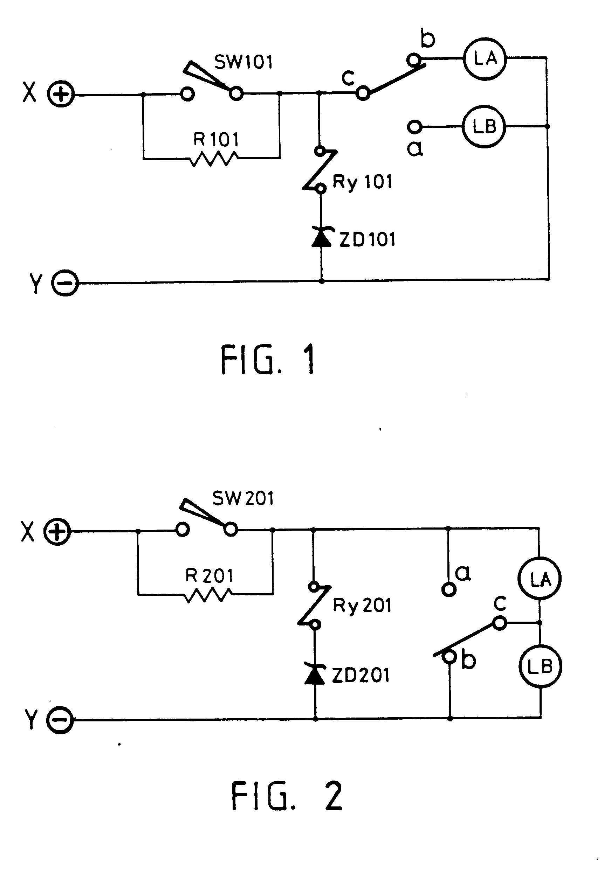

The arrangement shown in Figure 1 comprises two differently coloured lamps LA and LB in a common transparent or translucent housing (not shown) and connected in parallel to a power supply terminal 7. The free terminals of lamps A and B are connected to contacts b and a respectively of a relay RY 101 which is connected in series with a zener diode Z0101, the series combination being connected between a further relay contact C and terminal Y. A switch SW101 is connected between the other power supply terminal X and relay contact C and is bypassed by a resistor R101. As shown, contacts b and c are normally closed and, whilst switch SW101 is open as shown, lamp LA is lit by current passing through resistor R101. In this condition the voltage dropped by zener diode ZD101 ensures that the winding of relay RY 101 does not activate the relay. Accordingly lamp LA remains lit.

On closing switch SW101, the full supply voltage is developed across the series combination of zener diode ZD101 and the winding of relay RY 101, and the increased voltage across the relay winding is sufficient to activate the relay and close contacts c and a, with the result that lamp LA is turned off and lamp LB is turned on.

The arrangement shown in Figure 2 is somewhat similar except that differently coloured lamps LA and LB are connected in series and are selectively bypassed by normally open relay contacts a and c or normally closed relay contacts b and c respectively. In the configuration shown, only lamp LA is lit (by current through resistor R201) but on closing switch SW201, the voltage drop across the winding of relay RY 201 becomes sufficient to activate the relay and close contacts a and c, whereby lamp LA turns off and lamp LB turns on

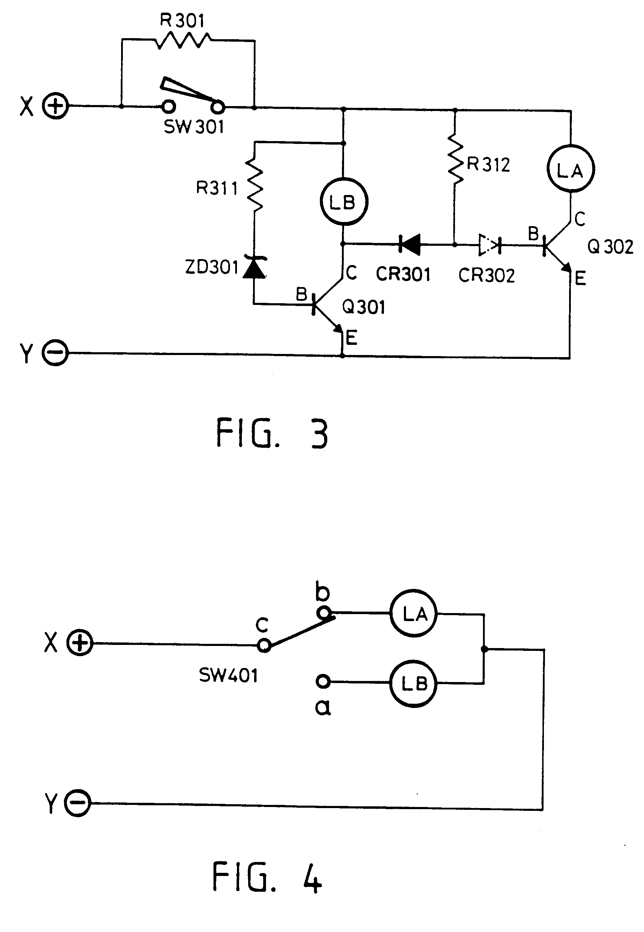

The circuit shown in Figure 3 is somewhat similar to that shown in Figure 2 except that each lamp LA and LB is connected in series with the collector and emitter of a respective switching transistor Q302 or Q301. When switch SW301 is open (as shown) current flows through bypass resistor R301 and develops a biasing voltage at the base B of transistor 302, via resistor R312 and optionally a diode CR302, which is sufficient to switch on transistor Q302 and hence lamp LA. However in this condition, owing to the voltage drop across zener diode ZD 301, the bias at base B of transistor Q301 is insufficient to switch on this transistor and hence lamp LB remains off.

On closing switch SW301, the bias (via resistor R311 and zener diode ZD 301) at base B of transistor Q 301 is sufficient to turn it on, and hence lamp LB lights up. Consequently the bias potential at the base B of transistor Q302 falls, and this transistor and its associated lamp LA turn off.

The arrangement shown in Figure 4 comprises two differently coloured lamps LA and LB in a common transparent or translucent housing (not shown) which are connected to respective contacts b and a of a double-throw switch SW401, whose other terminal c is connected to one terminal X of power supply terminals X and Y. Either lamp LA or lamp LB is turned on manually by means of the switch SW401.

The structure of each embodiment according to the present invention is described below:

Referring to FIG 1 the embodiment showing c-connection auxiliary relay is alternating the color-differential type light display device comprising:

power supply x end being ON/OFF alternatively subject to a switch SW101, relay RY 101 being manipulated by the switch SW101, both common connection C of relay RY101 and controlled end of relay coil being manipulated by the switch SW101, relay coil being positively series connected to Zener diode ZD101 to assure the relay with driven voltage greater than the drop formed at ends of luminaries LA when luminaries LA is series connected to drop resistance R101 for lumination, but less than voltage of power supply; constant-close connection b end of relay leads to normal color luminaries LA, and normally open connection a end leads to the second-color luminaries LB which provides the light of different color from normal-status light; both luminaries may select same or different lower, of which normal-status luminaries LA may select weaker normal-status light subject to power supply voltage matching and being series connected to drop resistance R101:

when the contacts of switch SW 101 are open drop resistance R101 is series connected to normal-status luminaries LA to enable normal-status luminaries LA to lit up and at this moment the ends of luminaries LA is dropped lower than operative voltage of relay RY 101 series with Zener diode ZD101 whereby normal-status luminaries LA remains lit;

when the switch SW101 is closed, power supply is switched ON directly and relay RY101 is closed to enable luminaries LA to extinguish whereby warning luminaries LB lits up.

Referring to Figure 2, the embodiment showing another wiring connection between relay connection assembly and luminaries of FIG1, is further characterized:

the two luminaries IA and LB being series connected are parallel connected to the output end and Y end of the switch SW201; said two luminaries may select same or different power, of which normal-status luminaries LA may select weaker normal-status light subject to power supply voltage matching and being series connected to drop resistance R201;

connection C of relay RY201 communicates with parallel connections of said two luminaries, and normally closed connection b leads to the other PIN or the second-color luminaries and under normal status to enable luminaries LB without current; normally open connection a leads to another PIN of normal-status colour luminaries LA;

when the contacts of switch SW201 are open, drop resistance R201 is series connected to normal-status luminaries LA to enable normal-status luminaries LA to lit up and at this moment the ends of luminaries LA is dropped lower than operative voltage of relay RY 101 series with Zener diode ZD 201 whereby normal-status luminaries LA remains lit;

when the switch SW201 is closed to enable luminaries LA to extinguish whereby warning luminaries LB lits up.

Referring to FIG 3 wherein the embodiment comprises solid circuit elements of same function as follows:

constant-close switch SW301 and drop resistance R301 being parallel connected of which the end leads to x end of positive-pole power supply, the other end being output end leads to the positive end of load luminaries LA and LB;

said luminaries may include normal-status luminaries LA and the second luminaries LB;

normal-status luminaries LA being series connected to the operating transistor Q302, PIN B of operating transistor Q302 and output end of the switch SW301 being parallel connected with bias resistance R312 to enable Q302 appear electricized under formal status; PIN B of transistor Q302 has a branch diode CR301 positively leads to PIN C of transistor Q301 of the second luminaries to enable PIN B, E of transistor Q302 to appear low impedance short circuit status in order to cut-off Q302 when transistor Q302 is electricized, and only little residual current passes R312 whereby normal-status luminaries LA extinguishes. For practical application we may additionally mount a bias diode CR302 to assure Q302 with cut-off function;

the second luminaries LB and transistor Q301 being series connected, PIN B of transistor Q301 and output end of the switch SW301 being parallel connected, Zener diode ZD301 and bias resistance R311 being series connected to form limiter bias element;

emitter E of transistor Q301, Q302 leads to negative end Y of power supply;

when SW301 is ON, limiter resistance R301 and normal-status luminaries LA being series connected to receive power and enable operating switch SW301 output to form branch voltage, and the value of branch voltage is less than the value of limiter voltage of said limiter bias element whereby Q301 appears low-impedance short-circuit status;

when SW301 is closed voltage of power supply is directly delivered to the output end of SW301, and the value of voltage is greater than the value of limiter voltage of limiter bias element to switch ON Q302 and further enable the second luminaries LB to lit up and simultaneously to enable Q302 to appear cut-off status and thereby switch OFF normal-status luminaries LA.

Referring to FIG 4, the embodiment showning a two-throw switch is directly applied to manipulate the color-differential type light display device wherein x end of power supply leads to common connections end c of the switch SW401, and operating end of normal-status color luminaries LA leads to constant-close connection end b of the switch AW401, the controlled end of the second luminaries LB which provides the light in different colour from normal-status color light leads to constant-open connection end a of the switch SW401, the other end of luminaries LA, LB being parallel connected lead to end Y of power supply.

To conclude above description, said color-differential type light display device which can provide light display on a color background through normal-status luminaries and second color display through another luminaries in different color from said normal-status luminaries, is effective to prevent display function from being disturbed by external light.

The invention includes the following optional features.

## Claims

1. An illuminated display arrangement comprising a transparent or nearly transparent external housing and at least two differently coloured light sources within said housing which are selectively energisable and are arranged to illuminate said housing such that said housing appears differently coloured according to which light source is energised, the apparent colour of the housing being substantially unaffected by external illumination.

2. An illuminated display arrangement according to claim 1 comprising two lamps connected in parallel in a circuit including a switch and a relay having a normally closed pair of contacts in series with one lamp and a normally open pair of contacts in series with the other lamp, the switch being bypassed by an impedance which passes sufficient current to light said one lamp but insufficient current to activate said relay, whereby on closing said switch the relay is activated to close the normally open pair of contacts and thereby switch on said other lamp and switch off said other lamp.

3. An illuminated display arrangement according to claim 1 comprising two lamps connected in series in a circuit including a switch and a relay having a normally closed pair of contacts which bypass one lamp and a normally open pair of contacts which bypass the other lamp, the switch being bypassed by an impedance which passes sufficient current to light said other lamp but insufficient current to activate said relay, whereby on closing said switch the relay is activated to close the normally open pair of contacts and thereby switch on said one lamp and switch off said other lamp.

4. An illuminated display arrangement according to claim 2 or claim 3 wherein the winding of said relay is connected in series with a zener diode which, when said switch is open, prevents the voltage across the relay from reaching a valve sufficient to activate the relay.

5. An illuminated display arrangement according to claim 1 comprising two lamps in series with the main electrodes of respective switching transistors in respective parallel branches of a circuit including a switch bypassed by a resistor which passes sufficient current to a control electrode of one switching transistor to switch on one of said lamps which is in series with said one switching transistor but insufficient current to a control electrode of the other switching transistor to switch on the other of said lamps, whereby on switching on said switch, said other switching transistor and said other lamp are switched on and said one switching transistor and said one lamp are switched off by virtue of a connection between the control electrode of said one switching transistor and the junction of said other lamp and other switching transistor.

6. An illuminated display arrangement as claimed in any preceding claim wherein said light sources or lamps are filament lamps, gas discharge lamps or light-emitting diodes.

7. An illuminated display arrangement according to any preceding claim which is a vehicle brake light or other indicator of light of a vehicle.

8. An illuminated display arrangement substantially as described hereinabove with reference to any of Figures 1 to 3 of the accompanying drawings.

FIG. 1

FIG. 2

FIG. 3

FIG. 4

European Patent
Office

**EUROPEAN SEARCH REPORT**

Application Number

EP 92 30 3184

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 10, no. 253 (M-512)(2309) 29 August 1986 & JP-A-61 081 832 ( HONDA MOTOR CO LTD ) 25 April 1986 * abstract * | 1 | B60Q1/44 B60Q3/04 |
| X | US-A-3 139 616 (PARSONS) * figure 2 * | 1,6-8 | |
| X | FR-A-2 625 584 (CATTEAU) * abstract; figures 1-4 * | 1,6-8 | |
| X | US-A-4 953 220 (MURAYAMA) * column 1, line 55 - line 60 * | 1,7,8 | |
| X | EP-A-0 130 321 (BLAUPUNKT-WERKE GMBH) * abstract; figure 1 * | 1 | |
| A | US-A-3 281 786 (LEICHSENRING) * figure 3 * | 1-3,6-8 | |
| A | US-A-3 516 058 (SANCHEZ) * figure 3 * | 1-3,6-8 | TECHNICAL FIELDS SEARCHED (Int. Cl.5 ) B60Q |

The present search report has been drawn up for all claims

| Place of search | Date of completion of the search | Examiner |
|---|---|---|
| THE HAGUE | 08 JULY 1992 | Onillon C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)